# FASCICULE DE BREVET EUROPEEN

(11) **EP 0 362 757 B1**
(45) Date de publication et mention de la délivrance du brevet: **11.08.1993**
(21) Numéro de dépôt: 89118212.3
(22) Date de dépôt: 02.10.1989
(51) Int. Cl.: F04C 29/04

(54) **Machine rotative du type pompe à vis**
Drehkolbenmaschine der Art einer Schraubenpumpe
Rotary machine of the screw pump type

(30) Priorité: 07.10.1988 FR 8813193
(43) Date de publication de la demande: 11.04.1990
(73) Titulaire: ALCATEL CIT, 75008 Paris (FR)
(72) Inventeur: Sibuet, René, F-74009 Annecy Cedex (FR); Long, Jacques, F-74000 Annecy (FR); Crinquette, Jean-Marie, F-74000 Annecy le Vieux (FR); Wright, Dan, F-74009 Annecy Cedex (GB); Riach, Allan, F-74009 Annecy Cedex (GB)
(74) Mandataire: Weinmiller, Jürgen

(56) Documents cités:
- GB-A- 785 860
- US-A- 3 833 318
- US-A- 3 913 346
- PATENT ABSTRACTS OF JAPAN, vol. 8, no.238 (M-335), 31 octobre 1984, page 8 M335 & JP-A-59 115 492 (HITACHI SEISAKUSHO K.K.) 03-07-1984

## Description

La présente invention concerne une machine rotative du type pompe à vis.

Ces machines sont entraînées par un moteur et elles ont un débit important, supérieur à 50.m³/h et tournent à des vitesses supérieures à 10000 t/min. Elles sont capables d'aspirer depuis la pression atmosphérique jusqu'à une pression de 10⁻² mbar. A une pression d'aspiration comprise entre 200 et 300 mbar, elles absorbent une puissance élevée qui est entièrement dissipée en chaleur. Comme les masses thermiques et les dissipations thermiques du rotor et du stator sont très différentes, on doit mettre des jeux importants entre les rotors et le stator de façon à éviter les grippages. Il en résulte une caractéristique débitpression de mauvaise qualité.

Le document JP-A-59 115 492 décrit une pompe à vis dans laquelle un fluide de refroidissement circule dans des canaux axiaux effectués dans les arbres des rotors. De même, le document GB-A-785 860 décrit un compresseur du type Roots dans lequel est également prévu une circulation de fluide dans les rotors pour leur refroidissement. Cependant, cette mesure ne permet pas d'obtenir des résultats suffisants.

La présente invention a pour but d'améliorer la caractéristique débit-pression en prenant des mesures permettant de diminuer les jeux entre rotors et stator.

L'invention a ainsi pour objet une machine rotative du type pompe à vis, comprenant un premier rotor et un second rotor, à vis conjuquées, supportés par des paliers à l'intérieur d'un carter-stator enveloppant les rotors et muni d'une entrée d'aspiration communiquant avec la cavité dans laquelle sont situés les rotors à l'une de leurs extrémités et d'une sortie de refoulement communiquant avec cette cavité à l'autre extrémité des rotors, le premier rotor étant entraîné en rotation par un moteur d'entraînement et la deuxième rotor étant entraîné en rotation par l'intermédiaire d'un engrenage de synchronisation logé dans une première chambre, située à une extrémité dudit carter, ledit engrenage de synchronisation baignant dans un fluide lubrifiant, la cavité du carter contenant lesdits rotors étant séparés de ladite première chambre contenant ledit engrenage par une première paroi traversée par les arbres desdits rotors à travers des joints d'étanchéité, les arbres des rotors traversant également une seconde paroi, située du côté de l'extrémité des rotors opposée au côté comportant ledit engrenage, à travers des joints d'étanchéité, la machine comportant en outre une canalisation principale, munie de moyens de pompage, dont une première extrémité aboutit dans ladite première chambre, les rotors comportant des canaux de circulation de fluide aboutissant à une extrémité dans ladite première chambre, un échangeur de chaleur étant disposé sur le parcours de ladite canalisation pour le refroidissement dudit fluide lubrifiant, caractérisée en ce que ledit carter-stator comporte, au-delà de la seconde paroi, une seconde chambre à laquelle est reliée une seconde extrémité de ladite canalisation principale, lesdits canaux des rotors aboutissant à leur autre extrémité dans ladite seconde chambre, en ce que le carter-stator comporte en outre des canaux de circulation de fluide aboutissant d'une part dans ladite seconde chambre et d'autre part dans ladite première chambre ou directement dans ladite canalisation principale, dans sa portion située entre ladite première chambre et ledit échangeur de chaleur.

Selon une réalisation préférée de l'invention, ledit carter-stator comporte une troisième chambre située entre ladite seconde paroi et une troisième paroi enfermant latéralement les rotors et traversée par les arbres des rotors à travers des joints d'étanchéité, des paliers supports des rotors étant disposés dans l'une ou l'autre des seconde et troisième parois entre les joints d'étanchéité, une canalisation auxiliaire relient ladite première chambre à ladite troisième chambre, lesdits canaux de circulation de fluide des rotors ayant d'une part des orifices aboutissant dans ladite troisième chambre, et d'autre part des orifices aboutissant entre des paliers support des rotors, montés dans ladite première paroi, et lesdits joints d'étanchéité de traversée des arbres des rotors à travers cette dite première paroi.

Selon une autre caractéristique, deux sondes de température sont installées à l'intérieur du carter-stator, dont l'une est disposée le plus proche possible des rotors, les deux sondes étant reliées à un coffret de commande élaborant un signal de commande utilisé pour la commande d'une vanne réglable située dans ladite canalisation munie de moyens de pompage.

Ainsi, par les dispositions de l'invention, on refroidit la machine rotative et on égalise les températures du carter-stator et des rotors, ce qui permet de conserver des jeux faibles, favorables à une bonne caractéristique pression-débit.

On va maintenant donner la description d'un exemple de mise en oeuvre de l'invention en se référant au dessin annexé dans lequel :

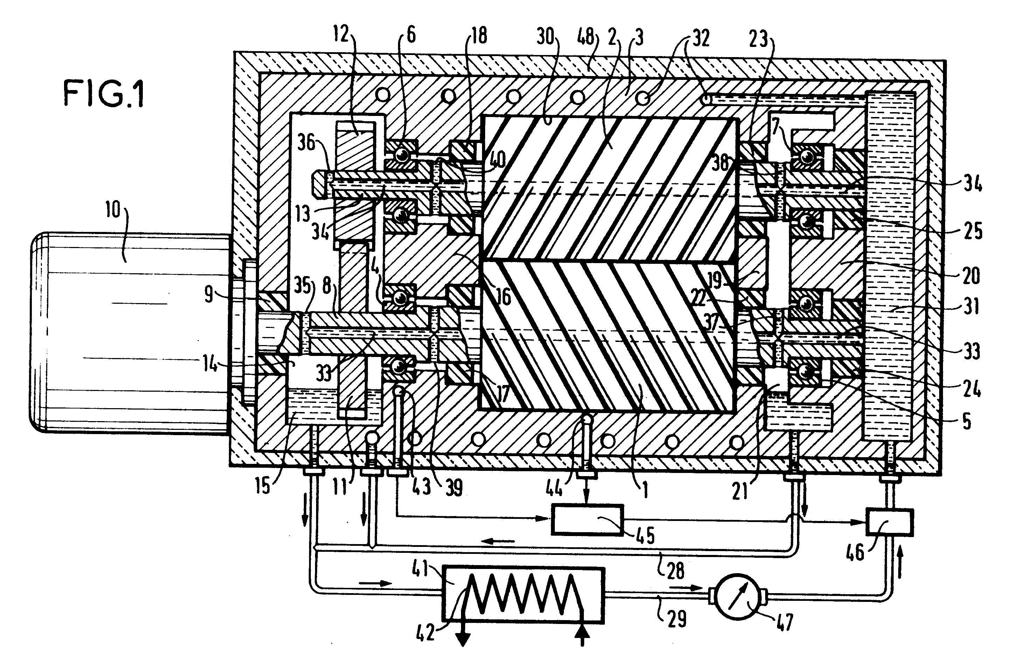

La figure 1 est une vue schématique en coupe axiale d'une pompe à vis à vide, sèche, selon l'invention.

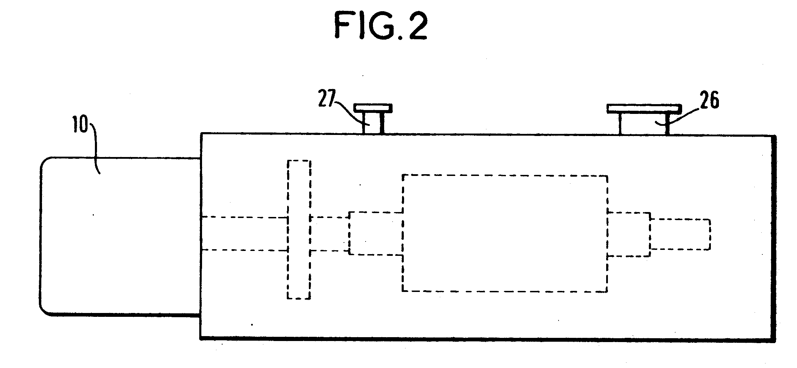

La figure 2 est une vue extérieure en élévation.

En se référant aux figures jointes, la machine rotative représentée, qui est dans le cas présent, une pompe à vis, sèche, à vide, comprend un premier rotor 1 et un second rotor 2 à vis conjuguées. Ces deux rotors sont montés à l'intérieur d'un carter-stator 3 qui les enveloppe et dans lequel ils sont supportés par des roulements à billes 4, 5 pour le premier rotor 1 et 6, 7 pour le second rotor 2.

L'arbre 8 du premier rotor 1 traverse l'extrémité du carter-stator 3 à travers un joint d'étanchéité 9 et est entraîné en rotation par un moteur d'entraînement 10. Le second rotor 2 est entraîné en rotation par l'intermédiaire d'un engrenage de synchronisation comprenant un pignon 11 monté sur l'arbre 8 et un pignon 12 monté sur l'arbre 13 du second rotor 2.

L'engrenage de synchronisation 11-12 est situé dans le carter 3 à l'intérieur d'une première chambre 14 contenant un liquide de lubrification 15. Cette première chambre 14 est séparée de la partie de la cavité 30 du carter contenant les deux rotors 1 et 2, par une première cloison 16 qui porte les roulements 4 et 6. Des joints d'étanchéité 17 et 18 sont disposés dans cette première cloison 16 à la traversée des arbres 8 et 13. A l'autre extrémité, les arbres 8 et 13 des rotors traversent successivement une troisième paroi 19 et une seconde paroi 20 délimitant entre elles deux, une troisième chambre 21. Une seconde chambre 31 est délimitée entre la seconde paroi 20 et l'extrémité du carter-stator. La troisième paroi 19 enferme latéralement les rotors 1 et 2 et elle est traversée par les arbres 8 et 13 à travers des joints d'étanchéité 22 et 23. De même, la seconde paroi 20 est traversée par les arbres 8 et 13 à travers des joints d'étanchéité 24 et 25. Les paliers à roulement 5 et 7 sont montés dans la seconde paroi 20 entre les joints 22 et 24 pour l'arbre 8 et entre les joints 23 et 25 pour l'arbre 13. De même, à l'extrémité opposée, les paliers à roulement 4 et 6 sont montés dans la première cloison entre les joints 17, 18 et la première chambre 14.

Le carter-stator 3 est muni d'une entrée d'aspiration 26 qui communique avec la cavité interne 30 du carter-stator à travers la troisième cloison 19 et d'une sortie de refoulement 27 qui communique avec la cavité interne 30 du carter-stator 3 à travers la première cloison 16. La troisième chambre 21 communique avec la première chambre 14 par une canalisation auxiliaire 28 et le fluide de lubrification et de refroidissement 15 situé dans ces deux chambres est aspiré par une pompe de circulation 47, située dans une canalisation principale 29, et refoulé dans la seconde chambre 31 et de là dans des canaux de circulation 32 du stator et 33, 34 des rotors. Le canal de circulation 32 du stator aboutit à l'autre extrémité de la machine dans la première chambre 14 ou, comme cela est représenté sur le dessin, directement dans la canalisation auxiliaire 28, ou principale 29, du côté de l'aspiration. Les canaux de circulation 33 et 34 des rotors ont des orifices d'évacuation 35 et 36 aboutissant directement dans la première chambre 14, des orifices 37 et 38 aboutissant dans la troisième chambre 21 et projetant du liquide lubrifiant sur les roulements 5 et 7 et enfin des orifices 39 et 40, pour la lubrification des roulements 4 et 6, situés entre les joints 17-18 et les roulements 4-6. La canalisation principale 29 comprend un échangeur de chaleur 41 refroidi par un circuit d'eau 42.

Deux sondes de température 43 et 44 sont installées à l'intérieur du carter-stator 3 dont l'une, la sonde 44, est disposée le plus près possible des rotors 1 et 2, de façon à mesurer les températures du stator et des rotors. Un coffret de commande 45 auquel elles sont reliées élabore un signal de commande de débit du fluide lubrifiant-réfrigérant 15 en fonction de la différence des températures mesurées par les sondes 43 et 44, ce signal commandant la manoeuvre d'une vanne de réglage de débit 46 située dans la canalisation principale 29.

Pour mieux uniformiser la température de la pompe à vide, l'ensemble du carter-stator 3 est enfermé dans un matériau calorifuge 48. Ce calorifuge 48 a l'avantage supplémentaire d'assurer une isolation phonique.

## Revendications

1. Machine rotative du type pompe à vis, comprenant un premier rotor (1) et un second rotor (2), à vis conjuguées, rapportés par des paliers (4 à 7) à l'intérieur d'un carterstator (3) enveloppant les rotors et muni d'une entrée d'aspiration communiquant avec la cavité (30) dans laquelle sont situés les rotors à l'une de leurs extrémités et d'une sortie de refoulement (27) communiquant avec cette cavité à l'autre extrémité des rotors, le premier rotor étant entraîné en rotation par un moteur d'entraînement (10), et le deuxième rotor étant entraîné en rotation par l'intermédiaire d'un engrenage de synchronisation (11-12) logé dans une première chambre (14), située à une extrémité dudit carter, ledit engrenage de synchronisation (11-12) baignant dans un fluide lubrifiant (15), la cavité (30) du carter contenant lesdits rotors étant séparés de ladite première chambre (14) contenant ledit engrenage (11-12) par une première paroi (16) traversée par les arbres (8, 13) desdits rotors à travers des joints d'étanchéité (17-18), les arbres des rotors traversant également une seconde paroi (20), située du côté de l'extrémité des rotors opposée au côté comportant ledit engrenage, à travers des joints d'étanchéité (24, 25), la machine comportant en outre une canalisation principale (29), munie de moyens de pompage (47), dont une première extrémité aboutit dans ladite première chambre (14), les rotors comportant des canaux de circulation de fluide aboutissant à une extrémité dans ladite première chambre (14), un échangeur de chaleur (41) étant disposé sur le parcours de ladite canalisation pour le refroidissement dudit fluide lubrifiant, caractérisée en ce que ledit carter-stator (3) comporte, au-delà de la seconde paroi (20), une seconde chambre (31) à laquelle est reliée une seconde extrémité de ladite canalisation principale (29), lesdits canaux des rotors aboutissent à leur autre extrémité dans ladite seconde chambre, en ce que le carter-stator (3) comporte en outre des canaux (32) de circulation de fluide aboutissant d'une part dans ladite seconde chambre (31) et d'autre part dans ladite première chambre (14) ou directement dans ladite canalisation principale (29), dans sa portion située entre ladite première chambre (14) et ledit échangeur de chaleur (41).

2. Machine rotative selon la revendication 1, caractérisée en ce que ledit carter-stator comporte une troisième chambre (21) située entre ladite seconde paroi (20) et une troisième paroi (19) enfermant latéralement les rotors et traversée par les arbres des rotors à travers des joints d'étanchéité (22, 23), des paliers (5, 7) supports des rotors étant disposés dans l'une ou l'autre des seconde et troisième parois entre les joints d'étanchéité, une canalisation auxiliaire (28) reliant ladite première chambre (14) à ladite troisième chambre (21), lesdits canaux (33, 34) de circulation du fluide des rotors ayant d'une part des orifices (37, 38) aboutissant dans ladite troisième chambre (21) et d'autre part des orifices (39, 40) aboutissant entre des paliers supports (4, 6) des rotors, montés dans ladite première paroi (16), et lesdits joints d'étanchéité (17, 18) de traversée des arbres des rotors à travers cette dite première paroi (16).

3. Machine rotative selon l'une des revendications précédentes, caractérisée en ce que deux sondes de températures (43, 44) sont installées à l'intérieur du carter-stator, dont l'une (44) est disposée le plus proche possible des rotors, les deux sondes étant reliées à un coffret de commande (45) élaborant un signal de commande utilisé pour la commande d'une vanne réglable (46) située dans ladite canalisation munie de moyens de pompage.

## Claims

1. A rotary machine of the screw pump type, the machine comprising a first rotor (1) and a second rotor (2) having conjugate screws and supported by bearings (4 to 7) inside a stator casing (3) enclosing the rotors and provided with a suction inlet communicating with one end of the cavity (30) in which the rotors are situated, and a delivery outlet (27) communicating with said cavity at the other end, the first rotor being rotated by a drive motor (10) and the second rotor being rotated via synchronizing gearing (11, 12) situated in a first chamber (14) at one of the ends of said casing, said synchronizing gearing (11, 12) running in a lubricating fluid (15), the cavity (30) of the casing containing said rotors being separated from said first chamber (14) containing said gearing (11, 12) by a first wall (16) through which the shafts (8, 13) of said rotors pass via seals (17, 18), the shafts of the rotors, at that end of the rotors which is opposite to the end having said gearing, passing through a second wall (20) via seals (24, 25), and said machine further comprising a main pipe (29) provided with pumping means (47) and connected by a first end to said first chamber (14), the rotors including fluid circulation channels terminating in said first chamber (14) with a heat exchanger (41) being disposed on the path of said pipe in order to cool said lubricating fluid, characterized in that said casing (3) comprises, beyond said second wall (20), a second chamber (31) to which a second end of said main pipe (29) is connected, said rotor channels terminating at their other end in said second chamber, in that said casing (3) further includes fluid circulation channels (32) terminating firstly in said second chamber (31) and secondly in said first chamber (14) or directly in that portion of said main pipe (29) which is situated between said first chamber (14) and said heat exchanger (41).

2. A rotary machine according to claim 1, characterized in that said stator casing includes a third chamber (21) situated between said second wall (20) and a third wall (19) closing off one of the ends of the rotors and having the rotor shafts passing therethrough via seals (22, 23), rotor supporting bearings (5, 7) being disposed in one or other of the second and third walls between the seals therein, an auxiliary pipe (28) connecting said first chamber (14) to said third chamber (21), said fluid circulation channels (33, 34) in the rotors having both orifices (37, 38) that open out into said third chamber (21) and orifices (39, 40) that terminate between the support bearings (4, 6) of the rotors which are mounted in said first wall (16) and said seals (17, 18) via which the rotor shafts pass through said first wall (16).

3. A rotary machine according to one of the preceding claims, characterized in that two temperature probes (43, 44) are installed inside the stator casing, one of them (44) being disposed as close as possible to the rotors, and the two probes being connected to a control box (45) which generates a control signal used for controlling an adjustable valve (46) situated in said pipe provided with pumping means.

## Patentansprüche

1. Drehende Maschine vom Schraubenpumpentyp, mit einem ersten Rotor (1) und einem zweiten Rotor (2), deren Schrauben komplementär sind und die über Lager (4 bis 7) in einem Statorgehäuse (3) untergebracht sind, das die Rotoren umgibt und einen mit dem Hohlraum (30), in dem die Rotoren sitzen, an einem Ende der Rotoren in Verbindung stehenden Saugeingang, sowie einen Druckausgang (27) aufweist, der mit diesem Hohlraum am anderen Ende der Rotoren in Verbindung steht, wobei der erste Rotor von einem Antriebsmotor (10) in Drehung versetzt wird und der zweite Rotor über ein in einer ersten an einem Ende des Gehäuses liegenden Kammer (14) untergebrachtes Synchrongetriebe (11, 12) angetrieben wird, wobei dieses Synchrongetriebe (11, 12) in ein Schmierfluid (15) eingetaucht ist und der Hohlraum (30) des Gehäuses mit den Rotoren gegenüber der ersten, das Getriebe (11, 12) enthaltenden Kammer (14) durch eine erste Wand (16) abgetrennt ist, die von den Wellen (8, 13) der Rotoren über Dichtungen (17, 18) durchquert wird, wobei die Wellen der Rotoren auch eine zweite Wand (20) über Dichtungen (24, 25) durchqueren, die auf Seiten des dem Getriebe abgewandten Rotorendes liegt, wobei die Maschine außerdem einen Hauptkanal (29) mit Pumpmitteln (47) aufweist, dessen erstes Ende in die erste Kammer (14) mündet, wobei die Rotoren Fluidumlaufkanäle aufweisen, die mit einem Ende in die erste Kammer (14) münden, wobei ein Wärmetauscher (41) in diesen Kanal eingebaut ist, um das Schmierfluid zu kühlen, dadurch gekennzeichnet, daß das Statorgehäuse (3) jenseits der zweiten Wand (20) eine zweite Kammer (31) aufweist, an die ein zweites Ende des Hauptkanals (29) angeschlossen ist, wobei die Kanäle der Rotoren an ihrem anderen Ende in diese zweite Kammer münden, daß das Statorgehäuse (3) außerdem Fluidumlaufkanäle (32) aufweist, die einerseits in die zweite Kammer (31) und andererseits in die erste Kammer (14) oder unmittelbar in den Hauptkanal (29) münden, und zwar in dem zwischen der ersten Kammer (14) und dem Wärmetauscher (41) liegenden Bereich.

2. Drehende Maschine nach Anspruch 1, dadurch gekennzeichnet, daß das Statorgehäuse eine dritte Kammer (21) aufweist, die zwischen der zweiten Wand (20) und einer dritten Wand (19) liegt und seitlich die Rotoren einschließt, sowie von den Rotorwellen über Dichtungen (22, 23) durchquert wird, wobei Lager (5, 7), die die Rotoren tragen, in der zweiten oder der dritten Wand zwischen den Dichtungen angeordnet sind und ein Hilfskanal (28) die erste Kammer (14) mit der dritten Kammer (21) verbindet, wobei die Kanäle (33, 34) in den Rotoren zum Umlauf des Fluids einerseits Öffnungen (37, 38) besitzen, die in die dritte Kammer (21) münden, und andererseits Öffnungen (39, 40), die zwischen den die Rotoren tragenden in der ersten Wand (16) montierten Lagern (4, 6) und den Dichtungen (17, 18) münden, durch die die Wellen der Rotoren die erste Wand (16) durchqueren.

3. Drehende Maschine nach einem der vorhergehenden Ansprüche, dadurch gekennzeichnet, daß zwei Temperatursonden (43, 44) im Inneren des Statorgehäuses angebracht sind, von denen die eine (44) möglichst nahe an den Rotoren liegt und die beide an einen Steuerkasten (45) angeschlossen sind, der ein Steuersignal erzeugt, das für die Steuerung eines in dem mit Pumpmitteln versehenen Kanal liegenden regelbaren Ventils (46) verwendet wird.
